# EUROPEAN PATENT SPECIFICATION

(11) **EP 2 473 385 B1**
(45) Date of publication and mention of the grant of the patent: **25.03.2015**
(21) Application number: 10814028.6
(22) Date of filing: 31.08.2010
(51) Int. Cl.: B60W 10/02, B60W 10/06, B60W 30/19, F16D 48/06, F16H 61/04, F16H 61/682, F16H 63/50

(54) **DEVICE AND METHOD FOR PERFORMING A GEAR CHANGE OF A VEHICLE**
VORRICHTUNG UND VERFAHREN ZUR DURCHFÜHRUNG EINES GETRIEBEWECHSELS IN EINEM FAHRZEUG
DISPOSITIF ET PROCÉDÉ POUR PRÉFORMER UN CHANGEMENT DE VITESSES DANS UN VÉHICULE

(30) Priority: 01.09.2009 SE 0950624
(43) Date of publication of application: 11.07.2012
(73) Proprietor: Scania CV AB, 151 87 Södertälje (SE)
(72) Inventor: SWARTLING, Fredrik, S-151 32 Södertälje (SE); GRANSTRÖM, Magnus, S-129 49 Hägersten (SE); HANSON, Mikael, S-125 51 Älvsjö (SE)
(86) International application number: PCT/SE2010/050925
(87) International publication number: WO 2011/028167

(56) References cited:
- WO-A2-2006/126876
- DE-A1- 10 332 668
- DE-A1-102004 029 076
- JP-A- H0 754 878
- US-B2- 7 048 671
- US-B2- 7 300 381

## Description

### TECHNICAL FIELD

The present invention relates to a method for executing a gear shift step in a motor vehicle comprising an engine and an automated manual transmission (AMT) incorporating a clutch and a gearbox. The invention relates also to a computer program and a computer program product comprising program code for a computer for implementing a method according to the invention. The invention relates also to a device for executing a gear shift step in a motor vehicle, and to a motor vehicle that is equipped with the device.

### BACKGROUND

In some vehicles today, gear shift steps are executed by automatically controlling a torque of a vehicle engine in such a way that the engine reaches a target speed at an appropriate level. The torque of the engine is controlled on the basis of stored information which indicates how ramping of the engine's torque is to be effected for a specific gear shift step. A clutch of the vehicle is typically closed during this gear shift procedure. When the target speed is reached, the execution of the gear shift step may take place. In this way, the vehicle's engine is torque-controlled throughout the gear shift procedure.

A disadvantage of executing gear shift steps in a motor vehicle in the manner indicated above is that it may take a relatively long time before a desired target speed is reached, particularly in cases where large gear shift steps are executed. The time that a gear shift procedure takes from when the engine speed starts to change to when the target speed is reached and a new gear is engaged in a gearbox of the vehicle is critical in that too long a time may lead to unwanted consequences, such as deceleration of the vehicle on an upgrade or acceleration on a downgrade.

DE10332668 discloses a method for controlling a gear change in a manual transmission gearbox in which during a first phase of matching the clutch torque and speed to that of a transmission shaft, the engine torque is maintained constant, while in a second phase the driving torque of the engine is increased with a delay after the beginning of the clutch engagement.

### SUMMARY OF THE INVENTION

An object of the present invention is to provide a novel and advantageous method for executing gear shift steps in a transmission of a motor vehicle.

Another object of the invention is to provide an improved method, a device and a computer program for executing a gear shift step in a transmission of a motor vehicle.

A further object of the invention is to provide a method, a device and a computer program for achieving a more robust procedure for executing a gear shift step in a transmission of a motor vehicle.

A further object of the invention is to provide a method, a device and a computer program for achieving a more time-efficient procedure for executing a gear shift step in a transmission of a motor vehicle.

These objects are achieved with a method for executing a gear shift step in a motor vehicle comprising an engine and an automated manual transmission incorporating a clutch according to claim 1.

According to one aspect of the invention, a method is provided for executing a gear shift step in a motor vehicle comprising an engine and an automated manual transmission incorporating a clutch and a gearbox. The method comprises the steps, during a gear shift procedure, of:
- controlling a torque of said clutch in order to make it possible for said gear shift step to take place before a target speed of said engine is reached; and
- when said clutch stops sliding, of controlling a torque in the engine on the basis of the torque in the clutch.

With advantage, a robust regulation of engine speed control after a new gear is engaged in the gearbox until it has stopped sliding is made possible. After it has slid together, the clutch is closed completely, thereby avoiding unwanted sliding of the clutch. In this way, the engine speed is controlled according to the invention during a period of the gear shift procedure, as opposed to the complete torque control of the engine during the gear shift procedure such as at present effected according to the state of the art.

Speed-controlling the engine during a gear shift procedure while at the same time controlling the torque of the clutch in a way in which the torque of the engine would otherwise be controlled achieves a more time-efficient gear shift procedure.

According to one aspect of the invention, control of the engine torque is initiated at substantially the time when the clutch stops sliding after the gear shift step. After the clutch has slid together, a value is calculated that represents a prevailing torque in the gearbox. The engine torque will be controlled on the basis of this calculated value that represents the prevailing torque in the gearbox.

According to one aspect of the invention, a robust algorithm for executing a gear shift step in a transmission of a motor vehicle is achieved.

The method is easy to implement in existing motor vehicles. Software for executing a gear shift step in a transmission of a motor vehicle according to the invention can be installed in a control unit of the vehicle during manufacture of the vehicle. A purchaser of the vehicle may thus have the possibility of selecting the function of the method as an option. Alternatively, software that comprises program code for executing the innovative method for executing a gear shift step in a transmission of a motor vehicle may be installed in a control unit of the vehicle on the occasion of upgrading at a service station, in which case the software may be loaded into a memory in the control unit. Implementing the innovative method is therefore cost-effective, particularly as no further sensors or operating means need be installed in the vehicle. Necessary hardware is currently already provided in the vehicle. The invention thus provides a cost-effective solution to the problems indicated above.

Software that incorporates program code for executing a gear shift step in a transmission of a motor vehicle may easily be updated or replaced. Furthermore, various parts of the software that comprises program code for executing a gear shift step in a transmission of a motor vehicle may be replaced independently of one another. This modular configuration is advantageous from a maintenance perspective.

The method may comprise the step of controlling the torque of the clutch in a predetermined way. The clutch torque may be controlled indirectly by controlling the position of the clutch. It should be noted that adjustments of the control of the torque of the clutch in the predetermined way can be carried out in real time according to a version.

The method may comprise the step of controlling the torque of the engine so that the control of said engine torque begins at a level corresponding to a prevailing torque in the clutch when the sliding of the clutch has ceased after the engagement of a new gear in the gearbox.

The method may comprise the step, after the clutch has stopped sliding, of controlling a torque of the engine in a predetermined way. It should be noted that adjustments of the control of the torque of the engine in the predetermined way can be effected in real time according to a version.

According to one aspect of the invention, a device is provided for executing a gear shift step in an automated manual transmission incorporating a clutch and a gearbox, which device comprises an engine for driving powered wheels via said transmission. The device incorporates means for, during a gear shift procedure, controlling a torque in said clutch in order to make it possible for said gear shift step to take place before a target speed of the engine (220) is reached; It also comprises means, when said clutch stops sliding, for controlling a torque of the engine on the basis of the torque in the clutch.

Advantageous embodiments are indicated in the dependent claims 6-8.

The above objects are also achieved with a motor vehicle that comprises the device for executing a gear shift step in accordance with claim 9. The motor vehicle may be a truck, bus or car.

According to one aspect of the invention, a computer program provided for executing a gear shift step in a transmission of a motor vehicle comprises program code stored on a computer-readable medium for causing an electronic control unit to perform the steps according to any one of claims 1-4. According to one aspect of the invention, a computer program product is provided which comprises a program code stored on a computer-readable medium for performing the method steps according to any one of claims 1-4 when said computer program is run on an electronic control unit.

Further objects, advantages and novel features of the present invention will become apparent to one skilled in the art from the following details, and also by putting the invention into practice. Although the invention is described below, it should be noted that it is not limited to the specific details described. Specialists who have access to the teachings herein will recognise further applications, modifications and incorporations within other fields, which are within the scope of the invention.

### BRIEF DESCRIPTION OF THE DRAWINGS

For a more complete understanding of the present invention and further objects and advantages thereof, the detailed description set out below should be read together with the accompanying drawings, in which the same reference notations denote similar items in the various drawings, and in which:
Figure 1 illustrates schematically a vehicle according to an embodiment of the invention;
Figure 2 illustrates schematically a subsystem for the vehicle depicted in

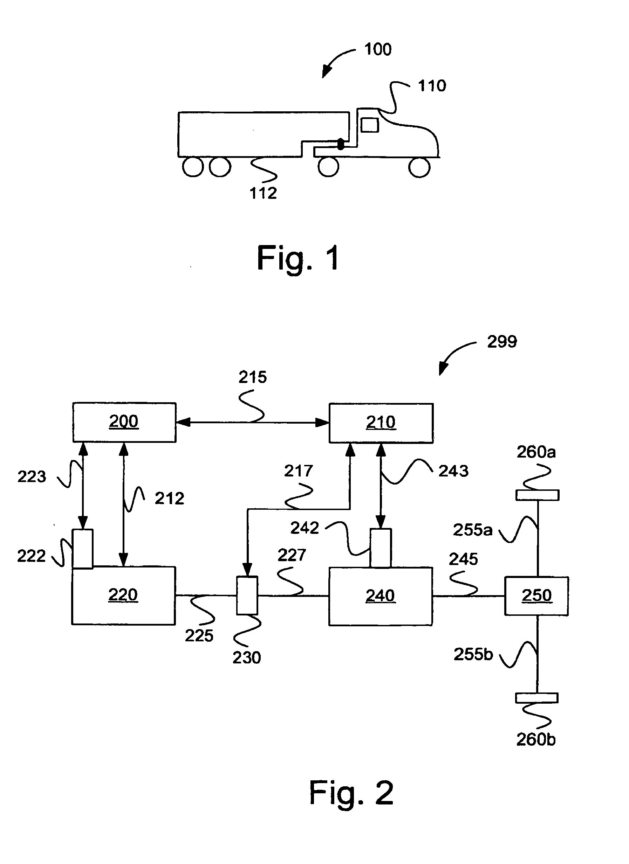

Figure 1, according to an embodiment of the invention;

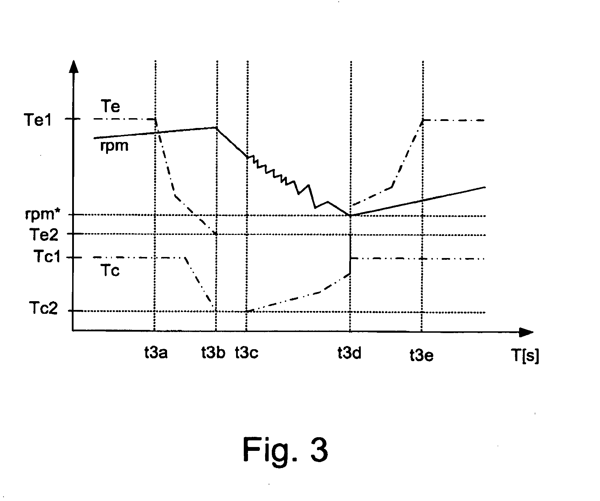

Figure 3 is a schematic diagram representing a gear shift procedure according to an embodiment of the invention;

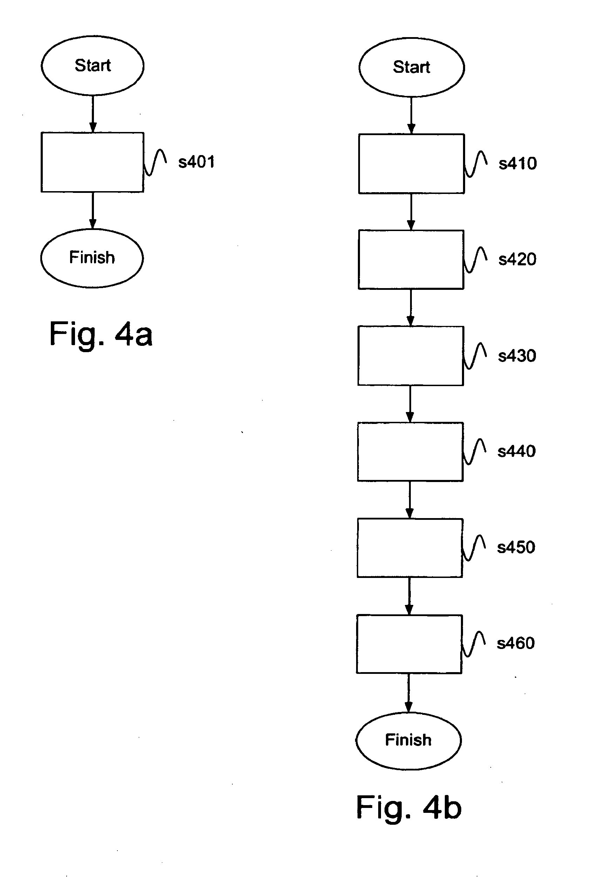

Figure 4a is a schematic flowchart of a method according to an embodiment of the invention;
Figure 4b is a more detailed schematic flowchart of a method according to an embodiment of the invention; and

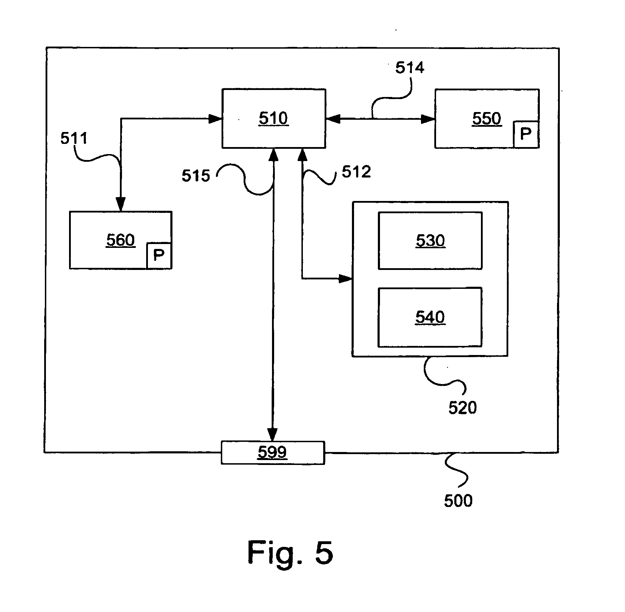

Figure 5 illustrates schematically a computer according to an embodiment of the invention.

### DETAILED DESCRIPTION OF THE DRAWINGS

Figure 1 depicts a side view of a vehicle 100. The exemplified vehicle 100 comprises a tractor unit 110 with a trailer 112. The vehicle may be a heavy vehicle, such as a truck or a bus. The vehicle may alternatively be a car.

The term "link" refers herein to a communication link that may be a physical connection such as an opto-electronic communication line, or a non-physical connection such as a wireless connection, e.g. a radio link or microwave link.

Figure 2 depicts a subsystem 299 of the vehicle 100. The subsystem 299 is situated in the tractor unit 110. The subsystem 299 has an engine 220 that is provided with an output shaft 225 connected to a clutch 230. The engine 220 may be a combustion engine with any number of cylinders, e.g. 5 or 6 cylinders. The clutch 230 may be a clutch comprising two disc plates. The clutch 230 is also connected to a gearbox 240 via a shaft 227. The gearbox 240 has an output shaft 245 connected to a final gear 250. The final gear 250 is connected to a first powered wheel 260a via a first driveshaft 255a. The final gear 250 is connected to a second powered wheel 260b via a second driveshaft 255b. The engine 220 is adapted to transmit power to the respective powered wheels 260a and 260b via a transmission comprising the shaft 225, the clutch 230, the shaft 227, the gearbox 240, the shaft 245, the final gear 250 and the drive shafts 255a and 255b.

A transmission control unit 210 is adapted to control the gearbox 240 via a link 218. The transmission control unit 210 is adapted to, for example, execute any desired gear shift step in the gearbox 240. A gear shift step may be between a second gear of the gearbox 240 and a third gear of the gearbox 240. Another gear shift step may be between a third gear and a fifth gear of the gearbox 240. Yet another gear shift step may be between a sixth gear and a third gear of the gearbox 240. A gear shift step can incorporate a change between any two gear steps in the gearbox 240.

The transmission control unit 210 is also adapted to control the clutch 230 via a link 217. The transmission control unit 210 is adapted to control a torque Tc in the clutch 230 via operating means such as air pressure means (not illustrated).

One or more sensors and operating means 242 are provided adjacent to the gearbox 240. At least one sensor 242 is adapted to measure a prevailing speed in the gearbox 240 and to continuously send signals containing information about the prevailing speed in the gearbox to the transmission control unit 210 via a link 243. At least one operating means 242 is adapted to disengage and engage various gears in the gearbox in order to achieve the execution of gear shift steps according to the driver's wishes or in response to control routines stored in the transmission unit 210.

An engine control unit 200 is adapted to communication with the transmission control unit 210 via a link 215. The engine control unit 200 may be detachably connected to the first control unit 210. The engine control unit 200 may alternatively be adapted to communication with the transmission control unit 210 via an internal network in the vehicle.

The engine control unit 200 is adapted to control a torque Te of the engine 220. According to a version, the torque Te is a torque of a flywheel (not illustrated) of the engine 220. The engine control unit 200 is adapted to control a torque Te of the engine 220 on the basis of a torque requested by a driver. Alternatively, the engine control unit 200 is adapted to control a torque Te of the engine 220 on the basis of, for example, an automatically requested torque.

One or more sensors 222 are adapted to measure a prevailing speed of the engine 220 and to continuously send signals containing information about the prevailing speed of the engine to the engine control unit 200 via a link 223.

Figure 3 is a schematic diagram representing a gear shift procedure according to an embodiment of the invention. The diagram illustrates three curves representing how a torque Te of the engine 220, a speed rpm of the engine 220 and a torque Tc in the clutch 240 vary over time.

At a time t3a, a gear shift step is initiated during a gear shift procedure in the transmission of the vehicle 100. Between time t3a and a time t3b, the torque Te is ramped in a predetermined way from a first level Te1 to a second level Te2. According to this example, Te2 is zero (0) Nm.

At any desired time between time t3a and time t3b, the torque Tc is also ramped in a predetermined way from a first level Tc1 to a second level Tc2. At the first torque level Tc1, the clutch 230 is brought into full engagement. At the second torque level Tc2, the clutch 230 is fully disengaged and no sliding occurs in the clutch 230.

Between time t3b and a time t3c, a change in the speed rpm of the engine 220 is effected on the basis of the torque Te of the engine 220. Time t3c is any desired time. Time t3c is preferably close to time t3b, so a period of time defined by the interval between t3b and t3c should be relatively short. In this way, a time-efficient procedure for executing a gear shift step according to the invention is achieved.

At time t3c, a new gear is engaged in the gearbox 240. At time t3c, the torque Tc in the clutch 230 is controlled according to the invention in such a way that the clutch 230 begins to slide together. The sliding process in the clutch 230 takes place between time t3c and a time t3d. Between time t3c and time t3d, the engine 220 is speed-controlled.

According to an example, the engine speed rpm reaches at time t3d a predetermined target speed rpm* which is associated with the gear shift step to be executed in the gear shift procedure. At time t3d, the clutch 230 has stopped sliding. According to an aspect of the invention, the torque Tc in the clutch 230 is ramped in a way in which the torque Te of the engine 220 would be ramped according to the state of the art after a new gear has been engaged.

At time t3d, a prevailing torque Tc in the clutch 230 is determined. This may be done by means of routines stored in the transmission control unit 210. A prevailing torque Tc in the clutch 230 is modelled to make it possible for it to be estimated. At time t3d, control of the torque Te of the engine 220 is initiated. Immediately after time t3d, the clutch 230 is closed, thereby ensuring that there is no sliding of the clutch 230.

At time t3d, the speed of the engine 220 starts changing in a desired manner in response to the control of the torque Te of the engine 220. According to an example, the torque Tc in the clutch is determined as being substantially 500 Nm at time t3d. According to that example, control of the torque Te of the engine is initiated at time t3d at substantially corresponding torque Te of the engine, viz. 500 Nm.

Between time t3d and a time t3e, the torque Te of the engine is ramped in a predetermined way. At time t3d, the clutch 230 is controlled in such a way that a maximum torque Tc is transmitted in the clutch 230. After time t3d, a maximum torque Tc is transmitted in the clutch 230. At time t3e, the torque Te of the engine 220 reaches a maximum available torque.

It should be noted that a gear of the gearbox 240 is engaged before the speed of the engine 220 reaches the target speed rpm*. This is possible in an AMT where the clutch is controllable.

The description above is an example of a version where a gear is engaged when an engine speed has been lowered to a target level. A prevailing speed rpm will then exceed the target speed when the new gear is engaged. A specialist will appreciate that the invention can be applied during a gear shift procedure where a gear is engaged when an engine speed is increased to a target level. A prevailing speed rpm will then be below the target speed when the new gear is engaged.

Figure 4a is a schematic flowchart of a method for executing a gear shift step in a motor vehicle 100 comprising an engine 220 and an automated manual transmission incorporating a gearbox 240 and a clutch 230, according to an embodiment of the invention. The method comprises a first step s401 incorporating the steps, during a gear shift procedure, of
- controlling a torque of said clutch in order to make it possible for said gear shift step to take place before a target speed in said engine is reached; and
- when said clutch stops sliding, of controlling a torque of the engine on the basis of the torque of the clutch. The method ends after step s401.

Figure 4b is a schematic flowchart of a method for executing a gear shift step in a motor vehicle 100 comprising an engine 220 and an automated manual transmission (AMT) incorporating a gearbox 240 and a clutch 230, according to an embodiment of the invention.

The method comprises a first step s410 incorporating the step, at any desired time during the gear shift procedure, of engaging a new gear when an engine speed rpm has not yet reached a predetermined target speed rpm*. Step s410 is followed by a step s420.

Method step s420 incorporates the step of speed-controlling the engine towards its target speed while at the same time as controlling a torque Tc in the clutch 230. Step s420 is followed by a step s430.

Method step s430 incorporates the step, when sliding of the clutch during a gear shift procedure has ceased, of determining a prevailing torque Tc in the clutch 230. Step s430 is followed by a step s440.

Method step s440 incorporates the step of closing the clutch 230. Step s440 is followed by a step s450.

Method step s450 incorporates the step of starting to control the engine 220 by torque control instead of speed control, based on the determined prevailing torque Tc of the clutch 230. Step s450 is followed by a step s460.

Method step s460 incorporates the step of controlling the torque Tc of the engine 220 in a predetermined way by ramping. The method ends after step s460.

Figure 5 is a diagram of a version of a device 500. The control units 200 and 210 described with reference to Figure 2 may in a version comprise the device 500. The device 500 comprises a non-volatile memory 520, a data processing unit 510 and a read/write memory 550. The non-volatile memory 520 has a first memory element 530 in which a computer program, e.g. an operating system, is stored for controlling the function of the control units 200 and 210. The device 500 further comprises a bus controller, a serial communication port, I/O means, an A/D converter, a time and date input and transmission unit, an event counter and an interruption controller (not depicted). The non-volatile memory 520 has also a second memory element 540.

A computer program P is provided that comprises routines for executing a gear shift step in a motor vehicle 100 comprising an engine 220 and an automated manual transmission incorporating a clutch 230 and a gearbox 240 according to the innovative method. The program P comprises routines for controlling said engine 220 towards its target speed rpm*. This method step may be any desired step. The program P comprises routines for controlling a torque Tc in said clutch 230 in order to make it possible for said gear shift step to take place before said target speed rpm is reached, and for, when sliding of the clutch has ceased, controlling the torque Te of the engine 220 on the basis of the torque Tc in the clutch 230, in accordance with the innovative method. The program P may be stored in an executable form or compressed form in a memory 560 and/or in a read/write memory 550.

Where it is stated that the data processing unit 510 performs a certain function, it means that it performs a certain part of the program which is stored in the memory 560 or a certain part of the program which is stored in the read/write memory 550.

The data processing device 510 can communicate with a data port 599 via a data bus 515. The non-volatile memory 520 is intended for communication with the data processing unit 510 via a data bus 512. The separate memory 560 is adapted to communicate with the data processing unit 510 via a data bus 511. The read/write memory 550 is intended to communicate with the data processing unit 510 via a data bus 514. For example, the links 215, 217 and 243 may be connected to the data port 599 (see Figure 2).

When data are received on the data port 599, they are stored temporarily in the second memory element 540. When input data received have been temporarily stored, the data processing unit 510 will be ready to effect execution of codes in a form described above. According to a version, signals received on the data port 599 contain information about the prevailing torque of the clutch 230 when sliding of the clutch 230 has ceased after a gear has been engaged in the gearbox 240. According to a version, signals received on the data port 599 comprise information about the prevailing speed of the engine 220 and/or the prevailing speed in the gearbox 240. The signals received on the data port 599 may be used by the device 500 for effecting the innovative method.

Parts of the methods herein described may be performed by the device 500 by means of the data processing unit 510 which runs the program stored in the memory 560 or the read/write memory 550. When the device 500 runs the program, procedures herein described are executed.

The foregoing description of the preferred embodiments of the present invention has been provided to illustrate and describe the invention. It is not intended to be exhaustive or to limit the invention to the variants described. Many modifications and variants will obviously suggest themselves to one skilled in the art. The embodiments have been chosen and described in order best to make clear the principles of the invention and its practical applications and hence to make it possible for specialists to understand the invention for various embodiments and with the various modifications appropriate to the intended use.

## Claims

1. A method for executing a gear shift step in a motor vehicle (100; 110) comprising an engine (220) and an automated manual transmission incorporating a clutch (230) and a gearbox (240), comprising the steps,
during a gear shift procedure, of:
- engaging (s410) a new gear when a speed rpm of the engine (220) has not yet reached a predetermined target speed rpm*
- controlling the speed (s420) of the engine (220) towards said target speed (rpm*) and simultaneously controlling (s420) a torque (Tc) in said clutch (230)
**characterised by** the steps of :
- determining (s430) a prevailing torque (Tc) in the clutch (230) when the latter stops sliding; and
- thereafter controlling (s450) a torque (Te) of the engine (220) on the basis of the torque (Tc) in the clutch (230).

2. A method according to claim 1, further comprising the step of:
- controlling (s420) the torque (Tc) in the clutch (230) in a predetermined way.

3. A method according to claim 1 or 2, comprising the step of:
- controlling (s450) the torque (Te) of the engine (220) so that the control of said engine torque (Te) begins at a level that corresponds to a prevailing torque (Tc) in the clutch (230) when sliding of the clutch (230) has ceased after engagement of a new gear in the gearbox (240).

4. A method according to any one of the foregoing claims, comprising the step of:
- controlling (s450) a torque (Te) of the engine (220) in a predetermined way after the clutch (230) has stopped sliding.

5. A device for executing a gear shift step in an automated manual transmission incorporating a clutch (230) and a gearbox (240), which device comprises an engine (220) for driving powered wheels (260a, 260b) via said transmission, comprising
means (200; 210; 500) for, during a gear shift procedure, engaging a new gear when a speed rpm of the engine (220) has not reached a predetermined target speed rpm*;
means (200; 210; 500) for speed-controlling the engine (220) towards said target speed (rpm*) and simultaneously controlling a torque (Tc) in said clutch (230); **characterised by** means (200; 210; 500) for determining a prevailing torque (Tc) in the clutch (230) when the latter stops sliding; and
means (200; 210; 500) for controlling a torque (Te) of the engine (220) on the basis of the torque (Tc) in the clutch (230).

6. A device according to claim 5, further comprising:
- means (200; 210; 500) for controlling the torque (Tc) in the clutch (230) in a predetermined way.

7. A device according to claim 5 or 6, further comprising:
- means (200; 210; 500) for controlling the torque (Te) of the engine (220) in such a way that the control of said engine torque (Te) begins at a level that corresponds to a prevailing torque (Tc) in the clutch (230) when sliding of the clutch (230) has ceased.

8. A device according to any one of claims 5-7, further comprising:
- means (200; 210; 500) for controlling a torque (Te) of the engine (220) in a predetermined way after the clutch (230) has stopped sliding.

9. A motor vehicle (100; 110) comprising a device according to any one of claims 5-8.

10. A motor vehicle (100; 110) according to claim 9, which motor vehicle is any from among truck, bus or car.

11. A computer program (P) for executing a gear shift step in a motor vehicle (100; 110) comprising an engine (220) and an automated manual transmission incorporating a clutch (230) and a gearbox (240), which computer program (P) comprises program code stored on a computer-readable medium for causing an electronic control unit (200; 210; 500) to perform the steps according to any one of claims 1-4.

12. A computer program product comprising a program code stored on a computer-readable medium for performing the method steps according to any one of claims 1-4 when said computer program is run on an electronic control unit (200; 210; 500).

## Patentansprüche

1. Verfahren zum Ausführen eines Gangschaltschritts in einem Kraftfahrzeug (100; 110), welches einen Motor (220) und ein automatisiertes Schaltgetriebe umfasst, wobei das automatisierte Schaltgetriebe eine Kupplung (230) und ein Getriebe (240) beinhaltet, das Verfahren umfassend die Schritte während eines Gangschaltvorgangs:
- Einlegen (s410) eines neuen Gangs, wenn eine Drehzahl rpm des Motors (220) eine vorbestimmte Solldrehzahl rpm* noch nicht erreicht hat
- Steuern der Drehzahl (s420) des Motors (220) in Richtung der Solldrehzahl (rpm*) und gleichzeitig Steuern (s420) eines Drehmoments (Tc) in der Kupplung (230), gekennzeichnet durch die Schritte:
- Bestimmen (s430) eines vorherrschenden Drehmoments (Tc) in der Kupplung (230), wenn diese zu schleifen aufhört; und
- danach Steuern (s450) eines Drehmoments (Te) des Motors (220) basierend auf dem Drehmoment (Tc) in der Kupplung (230).

2. Verfahren nach Anspruch 1, weiter umfassend die Schritte:
- Steuern (s420) des Drehmoments (Tc) in der Kupplung (230) auf vorbestimmte Weise.

3. Verfahren nach Anspruch 1 oder 2, umfassend die Schritte:
- Steuern (s450) des Drehmoments (Te) des Motors (220) derart, dass die Steuerung des Motordrehmoments (Te) auf einem Niveau beginnt, welches einem vorherrschenden Drehmoment (Tc) in der Kupplung (230) entspricht, wenn das Schleifen der Kupplung (230) nach Einlegen eines neuen Gangs im Getriebe (240) beendet ist.

4. Verfahren nach einem der vorangehenden Ansprüche, umfassend die Schritte:
- Steuern (s450) eines Drehmoments (Te) des Motors (220) auf vorbestimmte Weise, nachdem die Kupplung (230) zu schleifen aufgehört hat.

5. Vorrichtung zum Ausführen eines Gangschaltschritts in einem automatisierten Schaltgetriebe, welches eine Kupplung (230) und ein Getriebe (240) umfasst, wobei die Vorrichtung einen Motor (220) zum Antreiben angetriebener Räder (260a, 260b) über das Getriebe umfasst, die Vorrichtung umfassend:
Mittel (200; 210; 500) zum, während eines Gangschaltvorgangs, Einlegen eines neuen Gangs, wenn eine Drehzahl rpm des Motors (220) eine vorbestimmte Solldrehzahl rpm* noch nicht erreicht hat;
Mittel (200; 210; 500) zum Drehzahlsteuern des Motors (220) in Richtung der Solldrehzahl (rpm*) und zum gleichzeitigen Steuern eines Drehmoments (Tc) in der Kupplung (230);
gekennzeichnet durch
Mittel (200; 210; 500) zum Bestimmen eines vorherrschenden Drehmoments (Tc) in der Kupplung (230), wenn diese zu schleifen aufhört; und
Mittel (200; 210; 500) zum Steuern eines Drehmoments (Te) des Motors (220) basierend auf dem Drehmoment (Tc) in der Kupplung (230).

6. Vorrichtung nach Anspruch 5, weiter umfassend:
- Mittel (200; 210; 500) zum Steuern des Drehmoments (Tc) in der Kupplung (230) auf vorbestimmte Weise.

7. Vorrichtung nach Anspruch 5 oder 6, weiter umfassend:
- Mittel (200; 210; 500) zum Steuern des Drehmoments (Te) des Motors (220) derart, dass die Steuerung des Motordrehmoments (Te) auf einem Niveau beginnt, welches einem vorherrschenden Drehmoment (Tc) in der Kupplung (230) entspricht, wenn das Schleifen der Kupplung (230) beendet ist.

8. Vorrichtung nach einem der Ansprüche 5-7, weiter umfassend:
- Mittel (200; 210; 500) zum Steuern eines Drehmoments (Te) des Motors (220) auf vorbestimmte Weise, nachdem die Kupplung (230) zu schleifen aufgehört hat.

9. Kraftfahrzeug (100; 110), welches eine Vorrichtung nach einem der Ansprüche 5-8 umfasst.

10. Kraftfahrzeug (100; 110) nach Anspruch 9, wobei das Kraftfahrzeug ein Lastkraftwagen, ein Bus oder ein Auto ist.

11. Computerprogramm (P) zum Ausführen eines Gangschaltschritts in einem Kraftfahrzeug (100; 110), welches einen Motor (220) und ein automatisiertes Schaltgetriebe umfasst, wobei das automatisierte Schaltgetriebe eine Kupplung (230) und ein Getriebe (240) umfasst, wobei das Computerprogramm (P) Programmcode umfasst, welcher auf einem computerlesbaren Medium gespeichert ist, um eine elektronische Steuereinheit (200; 210; 500) zu veranlassen, die Schritte nach einem der Ansprüche 1-4 durchzuführen.

12. Computerprogrammprodukt, umfassend einen Programmcode, welcher auf einem computerlesbaren Medium gespeichert ist, zum Durchführen der Verfahrensschritte nach einem der Ansprüche 1-4, wenn das Computerprogramm auf einer elektronischen Steuereinheit (200; 210; 500) ausgeführt wird.

## Revendications

1. Procédé pour exécuter une étape de changement de vitesse dans un véhicule à moteur (100 ; 110) comprenant un moteur (220) et une transmission manuelle automatisée incorporant un embrayage (230) et une boîte de vitesses (240), comprenant les étapes consistant, pendant une opération de changement de vitesse, à :
- mettre en prise (s410) une nouvelle vitesse lorsqu'une vitesse t/min du moteur (220) n'a pas encore atteint une vitesse cible prédéterminée t/min*;
- commander la vitesse (s420) du moteur (220) vers ladite vitesse cible (t/min*) et commander simultanément (s420) un couple (Tc) dans ledit embrayage (230) ;
**caractérisé par** les étapes consistant à :
- déterminer (s430) un couple prévalent (Tc) dans l'embrayage (230) lorsque ce dernier arrête de patiner ; et
- commander ensuite (s450) un couple (Te) du moteur (220) en fonction du couple (Tc) dans l'embrayage (230).

2. Procédé selon la revendication 1, comprenant de plus l'étape consistant à :
- commander (s420) le couple (Tc) dans l'embrayage (230) d'une façon prédéterminée.

3. Procédé selon la revendication 1 ou 2, comprenant l'étape consistant à :
- commander (s450) le couple (Te) du moteur (220) de telle sorte que la commande dudit couple moteur (Te) commence à un niveau qui correspond à un couple prévalent (Tc) dans l'embrayage (230) lorsque le patinage de l'embrayage (230) a cessé après la mise en prise d'une nouvelle vitesse dans la boîte de vitesses (240).

4. Procédé selon l'une quelconque des revendications précédentes, comprenant l'étape consistant à :
- commander (s450) un couple (Te) du moteur (220) d'une façon prédéterminée après que l'embrayage (230) a arrêté de patiner.

5. Dispositif pour exécuter une étape de changement de vitesse dans une transmission manuelle automatisée incorporant un embrayage (230) et une boîte de vitesses (240), ce dispositif comprenant un moteur (220) pour entraîner des roues motrices (260a, 260b) par l'intermédiaire de ladite transmission, comprenant :
des moyens (200 ; 210 ; 500) pour, durant une opération de changement de vitesse, mettre en prise une nouvelle vitesse lorsqu'une vitesse t/min du moteur (220) n'a pas atteint une vitesse cible prédéterminée t/min*;
des moyens (200 ; 210 ; 500) pour commander en vitesse le moteur (220) vers ladite vitesse cible (t/min*) et commander simultanément un couple (Tc) dans ledit embrayage (230) ; **caractérisé par** des moyens (200; 210 ; 500) pour déterminer un couple prévalent (Tc) dans l'embrayage (230) quand ce dernier arrête de patiner; et
des moyens (200 ; 210 ; 500) pour commander un couple (Te) du moteur (220) en fonction du couple (Tc) dans l'embrayage (230).

6. Dispositif selon la revendication 5, comprenant de plus :
- des moyens (200 ; 210 ; 500) pour commander le couple (Tc) dans l'embrayage (230) d'une façon prédéterminée.

7. Dispositif selon la revendication 5 ou 6, comprenant de plus :
- des moyens (200 ; 210 ; 500) pour commander le couple (Te) du moteur (220) de telle sorte que la commande dudit couple moteur (Te) commence à un niveau qui correspond à un couple prévalent (Tc) dans l'embrayage (230) lorsque le patinage de l'embrayage (230) a cessé.

8. Dispositif selon l'une quelconque des revendications 5 à 7, comprenant de plus :
- des moyens (200 ; 210 ; 500) pour commander un couple (Te) du moteur (220) d'une façon prédéterminée après que l'embrayage (230) a arrêté de patiner.

9. Véhicule à moteur (100 ; 110) comprenant un dispositif selon l'une quelconque des revendications 5 à 8.

10. Véhicule à moteur (100 ; 110) selon la revendication 9, ce véhicule à moteur étant l'un quelconque parmi un camion, un autocar ou une automobile.

11. Programme informatique (P) pour exécuter une étape de changement de vitesse dans un véhicule à moteur (100 ; 110) comprenant un moteur (220) et une transmission manuelle automatisée incorporant un embrayage (230) et une boîte de vitesses (240), ce programme informatique (P) comprenant un code de programme mémorisé sur un support lisible par un ordinateur pour provoquer la réalisation par une unité de commande électronique (200 ; 210 ; 500) des étapes selon l'une quelconque des revendications 1 à 4.

12. Produit de programme informatique comprenant un code de programme mémorisé sur un support lisible par un ordinateur pour réaliser les étapes de procédé selon l'une quelconque des revendications 1 à 4 lorsque ledit programme informatique est exécuté sur une unité de commande électronique (200 ; 210 ; 500).
